# EUROPÄISCHE PATENTANMELDUNG

(11) **EP 1 298 754 A1**
(43) Veröffentlichungstag der Anmeldung: **02.04.2003**
(21) Anmeldenummer: 01123169.3
(22) Anmeldetag: 27.09.2001
(51) Int. Cl.: H01M 8/24, H01M 8/04

(54) **Verfahren zum Betreiben eines Brennstoffzellenblocks und Brennstoffzellenblock**

(71) Anmelder: SIEMENS AKTIENGESELLSCHAFT, 80333 München (DE)
(72) Erfinder: Illner, Dieter, 91054 Erlangen (DE); Lersch, Josef, 91336 Heroldsbach (DE); Mattejat, Arno, 91088 Bubenreuth (DE)

(57) **Zusammenfassung**

Durch eine kühle Endplatte (1) geleitetes befeuchtetes Betriebsgas verliert während des Durchströmens der Endplatte (1) Wärme und somit Feuchtigkeit. Dies führt zu Schäden an den Membran-Elektrolyten der Brennstoffzellen. Zur Lösung dieses Problems wird ein Verfahren zum Aufheizen und zum Betreiben eines Brennstoffzellenblocks angegeben, bei dem durch Wärme der Brennstoffzellen erwärmtes Kühlwasser die Endplatte (1) im Bereich des Betriebsgaskanals (7) erwärmt.

## Beschreibung

Die Erfindung bezieht sich auf ein Verfahren zum Betreiben eines Brennstoffzellenblocks und auf einen Brennstoffzellenblock mit einem von einer Endplatte begrenzten Stapel von planaren Brennstoffzellen.

In einer Brennstoffzelle wird durch die elektrochemische Verbindung von Wasserstoff (H₂) und Sauerstoff (O₂) an einem Elektrolyten zu Wasser (H₂O) elektrischer Strom mit hohem Wirkungsgrad erzeugt und dies auch ohne Emission von Schadstoffen und Kohlendioxid (CO₂), wenn als Brenngas reiner Wasserstoff eingesetzt wird. Die technische Umsetzung dieses Prinzips der Brennstoffzelle hat zu unterschiedlichen Lösungen, und zwar mit verschiedenen Elektrolyten und Betriebstemperaturen zwischen 60°C und 1000°C geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen voneinander unterscheiden.

Eine einzelne Brennstoffzelle liefert eine Betriebsspannung von maximal etwa 1,1 V. Daher wird eine Vielzahl von Brennstoffzellen zu einer Brennstoffzellenanordnung zusammengeschlossen, beispielsweise zu einem Stapel planarer Brennstoffzellen der Bestandteil eines Brennstoffzellenblocks ist. Durch das In-Reihe-Schalten der Brennstoffzellen der Anordnung kann die Betriebsspannung der Anordnung 100 V und mehr betragen.

Eine planare Brennstoffzelle umfasst einen flachen Elektrolyten, an dessen eine flache Seite eine flache Anode und an dessen andere flache Seite eine ebenfalls flache Kathode grenzt. Diese beiden Elektroden bilden zusammen mit dem Elektrolyten eine sogenannte Elektrolyt-Elektroden-Einheit, die im Folgenden der Einfachheit halber auch Elektrolyt-Anordnung genannt wird. Angrenzend an die Anode ist ein Anodengasraum und angrenzend an die Kathode ein Kathodengasraum angeordnet. Zwischen dem Anodengasraum einer Brennstoffzelle und dem Kathodengasraum einer dieser Brennstoffzelle benachbarten Brennstoffzelle ist eine Verbundleiterplatte angeordnet. Die Verbundleiterplatte stellt eine elektrische Verbindung zwischen der Anode der erstgenannten Brennstoffzelle und der Kathode der zweitgenannten Brennstoffzelle her. In Abhängigkeit von der Art der Brennstoffzelle ist die Verbundleiterplatte beispielsweise als eine einzelne metallische Platte oder als ein Kühlelement ausgestaltet, das zwei aufeinander angeordnete Platten mit einem dazwischenliegenden Kühlwasserraum umfasst. Je nach Ausführungsform der Brennstoffzellen befinden sich in einem Brennstoffzellenstapel weitere Bauelemente, wie beispielsweise elektrisch leitende Schichten, Dichtungen oder Druckkissen.

In einem Brennstoffzellenblock sind Verbundleiterplatten und Elektrolyt-Elektroden-Einheiten in abwechselnder Reihenfolge gestapelt, wobei zwischen einer Elektrolyt-Elektroden-Einheit und einer Verbundleiterplatte jeweils ein Gasraum angeordnet ist. Mehrere solcherart geschichtet Brennstoffzellen bilden einen Brennstoffzellenstapel. Ein Brennstoffzellenblock umfasst einen oder mehrere Brennstoffzellenstapel. Ein Brennstoffzellenstapel wird von mindestens einer Endplatte, in der Regel jedoch an beiden Stapelenden durch jeweils eine Endplatte begrenzt. Eine solche Endplatte ist hierbei der jeweils äußersten Verbundleiterplatte des Stapels benachbart, wobei sich auch je nach Ausführungsform des Brennstoffzellenblocks zwischen der äußersten Verbundleiterplatte und der Endplatte weitere Bauteile befinden können. Eine Endplatte ist in der Regel eine stabile Metallplatte, die dem Brennstoffzellenblock eine gewisse Stabilität verleiht.

Die Brennstoffzellen eines Brennstoffzellenblocks werden während ihres Betriebs mit Betriebsgasen versorgt. Die Betriebsgase sind ein wasserstoffhaltiges Brenngas und ein sauerstoffhaltiges Oxidationsgas. Manche Ausführungsformen von Niedertemperatur-Brennstoffzellen, insbesondere Brennstoffzellen mit Polymer-Elektrolyt-Membranen (PEM-Brennstoffzellen), benötigen zum Betrieb befeuchtete Betriebsgase, insbesondere Betriebsgase, die zu 100 % mit Wasser gesättigt sind. Die Betriebsgase werden in einer geeigneten Einrichtung, wie beispielsweise einem Flüssigkeitsringverdichter oder anderen Befeuchtern auf die Temperatur der Brennstoffzellen aufgeheizt und mit Wasserdampf gesättigt. Kühlt ein aufgeheiztes und mit Wasserdampf gesättigtes Betriebsgas vor Eintritt in die Brennstoffzellen an irgend einer Stelle etwas ab, so verringert sich durch Auskondensation von Wasser der Feuchtigkeitsgehalt des Betriebsgases. Gelangt dieses etwas abgekühlte Betriebsgas anschließend in eine Brennstoffzelle, so wird es dort wieder auf die Temperatur der Brennstoffzelle aufgeheizt und ist in diesem wärmeren Zustand nicht mehr zu 100 % mit Wasser gesättigt. Schon ein geringer Feuchtigkeitsverlust im Betriebsgas führt zu einer Schädigung des extrem feuchtigkeitsempfindlichen Membran-Elektrolyten. Besonders problematisch ist es, wenn ein Betriebsgas über mehr als nur eine sehr kleine Strecke durch eine Endplatte eines Brennstoffzellenstapels hindurchgeleitet wird. Eine Endplatte eines Brennstoffzellenstapels strahlt auf ihrer dem Stapel abgewandten Seite Wärme an die Umgebung ab und ist somit kühler als die Brennstoffzellen des Brennstoffzellenstapels. Ein durch eine solche Endplatte hindurchgeleitetes Betriebsgas verliert somit während des Durchtritts durch die Endplatte Wärme und damit auch Feuchtigkeit.

Aufgabe der Erfindung ist es, ein Verfahren zum Betreiben eines Brennstoffzellenblocks sowie einen Brennstoffzellenblock anzugeben, bei dem ein Betriebsgas bei Durchströmen durch eine Endplatte nur unwesentlich an Feuchtigkeit verliert.

Bezüglich des Verfahrens wird die Aufgabe von einem Verfahren zum Betreiben eines Brennstoffzellenblocks gelöst, der einen von einer Endplatte begrenzten Stapel von planaren Brennstoffzellen umfasst, bei dem erfindungsgemäß sowohl Betriebsgas als auch durch Wärme der Brennstoffzellen erwärmtes Kühlwasser in direkten Kontakt mit der Endplatte gebracht werden, wobei das Kühlwasser in mehr als 50% des Bereichs des direkten Kontakts mit der Endplatte parallel zur Plattenebene geführt wird.

Niedertemperatur-Brennstoffzellen werden - je nach Bauart - in einem Temperaturbereich zwischen 60°C und 120°C betrieben. Während ihres Betriebs erzeugen Sie Abwärme und werden deshalb mit einem Kühlmittel - in der Regel Kühlwasser - auf dem vorbestimmten Temperaturbereich gehalten. Die vom Kühlwasser aufgenommene Wärme wurde bisher vollständig aus dem Brennstoffzellenblock herausgeführt. Durch die Nutzung der Wärme des Kühlwasser zum Aufheizen einer Endplatte eines Brennstoffzellenblocks wird ein Betriebsgas, das durch eine auf diese Weise aufgeheizte Endplatte hindurch geleitet oder an ihr entlang geleitet wird, auf im wesentlichen die Temperatur der Endplatte gehalten oder gebracht. Das Betriebsgas behält somit im wesentlichen alle seine Feuchtigkeit.

Hierbei ist es ausreichend, wenn die Endplatte nur im Bereich der Betriebsgasdurchleitung erwärmt wird. Es ist jedoch genauso gut möglich, die Endplatte als Ganzes zu erwärmen. Ein guter Wärmeübertrag vom Kühlwasser auf die Endplatte wird hierbei erreicht, indem das Kühlwasser soweit wie möglich, zumindest aber im überwiegenden Teil des Bereichs des direkten Kontakts mit der Endplatte, parallel zur Endplatte geführt wird. Die Erwärmung wird beispielsweise durchgeführt, indem das Kühlwasser, beispielsweise auf einer Seite der Endplatte und entlang der Endplatte geführt wird.

Vorzugsweise wird das Kühlwasser auf mindestens 30% der Fläche einer flachen Seite der Endplatte mit der Endplatte in direkten Kontakt gebracht. Hierdurch ist ein besonders guter Wärmeübertrag vom Kühlwasser auf die Endplatte gewährleistet.

Ein besonders guter Wärmeübertrag von der Endplatte auf das Betriebsgas wird erreicht, indem das Betriebsgas parallel zur Plattenebene durch die Endplatte hindurch geführt wird. Hierbei wird die Betriebsgasleitung oder der Betriebsgaskanal von der erwärmten Endplatte umschlossen und das Betriebsgas von allen Seiten erwärmt.

Zweckmäßigerweise wird die Endplatte durch das Kühlwasser auf im wesentlichen die Temperatur der Brennstoffzellen erwärmt. Hierdurch wird erreicht, dass das Betriebsgas auch bei einer sehr langen Durchleitung durch die Endplatte keine Wärme und Feuchtigkeit verliert. Es erreicht die Brennstoffzellen in einem Zustand 100 %iger Sättigung mit Wasser und schont somit die Membran-Elektrolyten der Brennstoffzellen.

Besonders vorteilhaft findet das Verfahren Anwendung als Verfahren zum Aufheizen eines Brennstoffzellenblocks. Beim Einschalten eines Brennstoffzellenblocks muss der Block und alle seine Komponenten auf die Betriebstemperatur gebracht werden. Dies geschieht üblicherweise durch eine externe Beheizung: Der Kühlwasserkreislauf wird außerhalb des Blocks beheizt, so dass warmes Kühlwasser als Heizwasser den Block durchströmt und ihn erwärmt. Hierbei wird der Brennstoffzellenblock auf zumindest annähernd seine Betriebstemperatur gebracht, bevor er mit den Betriebsgasen beaufschlagt wird und somit die elektrochemische Reaktion innerhalb der Brennstoffzellen in Gang gesetzt wird. Ein solches externes Heizverfahren ist zeitaufwendig und bedarf außerdem externer Heizgeräte.

Zeit- und energiesparender erfolgt das Anfahren des Brennstoffzellenblocks jedoch durch das autotherme Aufheizen mittels der in den Brennstoffzellen selbst erzeugten Reaktionswärme. Die Brennstoffzellen werden hierbei bei einer gegenüber der Betriebstemperatur kühleren Temperatur betrieben und so zügig wie möglich auf den Betriebstemperaturbereich aufgeheizt. Bei diesem Aufheizen sind die äußeren Endplatten sehr kalt gegenüber den Brennstoffzellen. Das durch eine Endplatte geleitete Betriebsgas verliert somit einen signifikanten Anteil seines Befeuchtungswassers. Ein autothermes Aufheizen mittels der in den Brennstoffzellen selbst erzeugten Reaktionswärme ist somit nur möglich, wenn die Endplatten des Brennstoffzellenstapels aufgeheizt werden. Bei Anwendung des erfindungsgemäßen Verfahrens als Verfahren zum Aufheizen eines Brennstoffzellenblocks kann eine externe Heizapparatur eingespart werden. Außerdem ist der Brennstoffzellenblock wesentlich zeit- und energiesparender angefahren.

Die auf den Brennstoffzellenblock gerichtete Aufgabe wird von einem Brennstoffzellenblock mit einem von einer Endplatte begrenzten Stapel von planaren Brennstoffzellen gelöst, bei dem die Endplatte erfindungsgemäß eine im wesentlichen parallel zur Plattenebene verlaufende Kühlwasserführung aufweist.

Mit Hilfe einer solchen Kühlwasserführung wird die Endplatte effektiv aufgeheizt. Die parallele Kühlwasserführung wird beispielsweise durch eine auf die Platte aufgebrachte Kühlwasserleitung realisiert oder als in die Plattenoberfläche eingefräste Kühlkanäle, die auf ihrer Länge mit einer Abdeckplatte verschlossen sind.

In vorteilhafter Ausgestaltung der Erfindung ist die Kühlwasserführung als eine Vertiefung in der Endplatte ausgeführt. Eine solche Führung, beispielsweise in Form eines in die Endplatte eingebrachten mäandernden Kanals oder in Form eines in der Platte ausgeführten Beckens, ist besonders einfach herzustellen.

Alternativ kann die Kühlwasserführung auch als Bohrung in der Endplatte ausgeführt sein. Bei einer solcherart ausgestalteten Endplatte wird das Kühlwasser durch das Innere der Endplatte geleitet, wodurch die Endplatte besonders schnell und gleichmäßig aufgeheizt wird.

Besonders vorteilhaft ist die Anwendung der Erfindung bei einer Endplatte mit einem im wesentlichen parallel zur Plattenebene verlaufenden Betriebsgaskanal. Ein Betriebsgas wird in der Regel in einem parallel zur Stapelrichtung des Brennstoffzellenstapels ausgerichteten Axialkanal zu den Brennstoffzellen und wieder von ihnen weg geleitet. Insbesondere bei der Unterteilung eines Brennstoffzellenblocks in mehrere Brennstoffzellenstapel, die eventuell jeweils durch eine Endplatte voneinander getrennt sind, ist die Leitung eines Betriebsgases von einem Axialkanal in einen anderen Axialkanal, der an einer anderen Stelle des Brennstoffzellenblocks angeordnet ist, notwendig. Das Betriebsgas wird dann besonders einfach von einem Axialkanal parallel zur Plattenebene durch eine Endplatte hindurch zum gewünschten Axialkanal geführt. Hierbei läuft das Betriebsgas eine erhebliche Strecke durch die Endplatte hindurch. Durch die Führung des warmen Kühlwassers entlang der Endplatte wird erreicht, dass das Betriebsgas auch bei Durchlaufen einer signifikanten Strecke durch die Endplatte kein Befeuchtungswasser oder nur einen unerheblichen Teil seines Befeuchtungswassers verliert. Hierdurch werden die Membran-Elektrolyten der Brennstoffzellen des Brennstoffzellenblocks geschont und deren Lebensdauer erheblich verlängert.

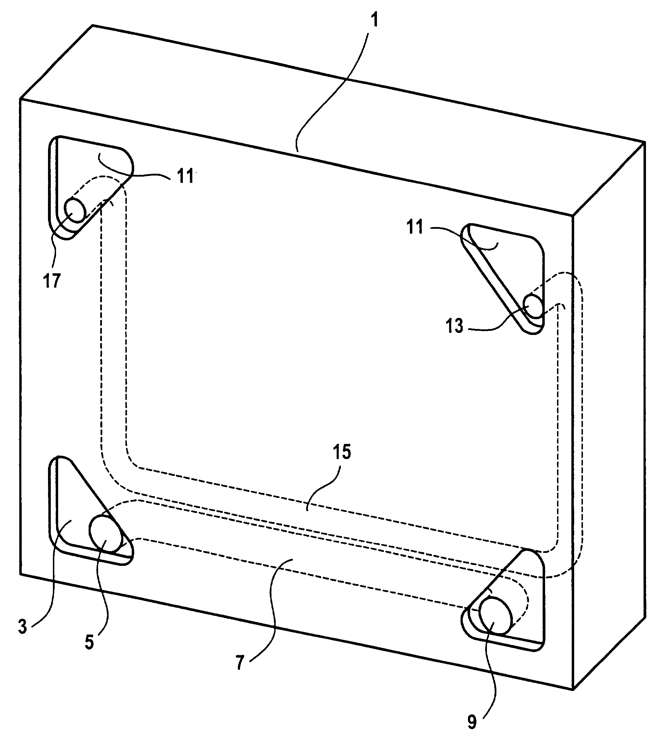

Ein Ausführungsbeispiel der Erfindung wird anhand einer Figur erläutert. Die Figur zeigt eine Endplatte 1 eines Brennstoffzellenblocks, der einen in Figur 1 nicht gezeigten Stapel von planaren Brennstoffzellen begrenzt. Die Endplatte 1 weist einen ersten Axialkanalanschluss 3 auf, in dem ein durch den Stapel in Stapelrichtung des Brennstoffzellenstapels ausgerichteter und durch den Stapel hindurch verlaufender nicht näher gezeigter Axialkanal mündet. Während des Betriebs des Brennstoffzellenblocks wird durch diesen Axialkanal reiner Sauerstoff als Betriebsgas geführt. Er mündet in den Axialkanalanschluss 3, um dann weiter durch die Bohrung 5 in den Betriebsgaskanal 7 zu strömen. Dieser Betriebsgaskanal 7 verläuft im Inneren der Endplatte 1 parallel zur Plattenebene der Endplatte 1 und ist in der Figur durch gestrichelte Linien dargestellt. Im weiteren Verlauf strömt der Sauerstoff durch die Bohrung 9 aus dem Betriebsgaskanal wieder heraus und in einen weiteren Axialkanal des Brennstoffzellenstapels hinein.

Die Endplatte 1 weist einen weiteren Axialkanalanschluss 11 auf, in den ein nicht näher gezeigter Axialkanal des Brennstoffzellenstapels mündet, der im Betrieb des Brennstoffzellenblocks Kühlwasser führt. Während des Betriebs des Brennstoffzellenblocks wird das Kühlwasser in den Brennstoffzellen auf die Temperatur der Brennstoffzellen aufgeheizt, durchströmt den nicht näher gezeigten Axialkanal bis zum Axialkanalanschluss 11. Dort strömt es durch die Bohrung 13 in die Kühlwasserführung 15. Die Kühlwasserführung 15 ist eine im wesentlichen parallel zur Plattenebene verlaufend ausgeführte Bohrung, die in der Figur ebenfalls durch gestrichelte Linien angedeutet ist. Während des Strömens des warmen Kühlwassers durch die Endplatte 1 gibt es einen Teil seiner Wärme an die Endplatte 1 ab und erwärmt die Endplatte 1 u.a. in dem Bereich, in dem das Betriebsgas durch die Endplatte 1 hindurch geleitet wird. Durch die Länge der Kühlwasserführung 15 erwärmt sich die Endplatte 1 auf im wesentlichen die Temperatur der Brennstoffzellen. Das ebenfalls auf Temperatur der Brennstoffzelle warme Betriebsgas Sauerstoff verliert beim Durchströmen des Betriebskanals 7 somit keine Wärme, weshalb aus dem Betriebsgas kein Befeuchtungswasser herauskondensiert.

## Patentansprüche

1. Verfahren zum Betreiben eines Brennstoffzellenblocks, der einen von einer Endplatte (1) begrenzten Stapel von planaren Brennstoffzellen umfasst, bei dem sowohl Betriebsgas als auch durch Wärme der Brennstoffzellen erwärmtes Kühlwasser in direkten Kontakt mit der Endplatte (1) gebracht werden, wobei das Kühlwasser in mehr als 50% des Bereichs des direkten Kontakts mit der Endplatte (1) parallel zur Plattenebene geführt wird.

2. Verfahren nach Anspruch 1, bei dem das Betriebsgas parallel zur Plattenebene durch die Endplatte (1) hindurch geführt wird.

3. Verfahren nach Anspruch 1 oder 2, bei dem das Kühlwasser auf mindestens 30% der Fläche einer flachen Seite der Endplatte (1) mit der Endplatte in direkten Kontakt gebracht wird.

4. Verfahren nach einem der vorhergehenden Ansprüche, verwendet als Verfahren zum Aufheizen des Brennstoffzellenblocks.

5. Brennstoffzellenblock mit einem von einer Endplatte (1) begrenzten Stapel von planaren Brennstoffzellen,
**dadurch gekennzeichnet, dass** die Endplatte (1) eine im wesentlichen parallel zur Plattenebene verlaufende Kühlwasserführung (15) aufweist.

6. Brennstoffzellenblock nach Anspruch 5,
**dadurch gekennzeichnet, dass** die Kühlwasserführung (15) als eine Vertiefung in der Endplatte (1) ausgeführt ist.

7. Brennstoffzellenblock nach Anspruch 6,
**dadurch gekennzeichnet, dass** sich die Vertiefung über mindestens 30% der Fläche einer flachen Seite der Endplatte (1) erstreckt.

8. Brennstoffzellenblock nach Anspruch 5,
**dadurch gekennzeichnet, dass** die Kühlwasserführung (15) als eine Bohrung (13) in der Endplatte (1) ausgeführt ist.

9. Brennstoffzellenblock nach einem der Ansprüche 5 bis 8, **gekennzeichnet durch** einen in der Endplatte (1) im wesentlichen parallel zur Plattenebene verlaufenden Betriebsgaskanal (7).
